# EUROPEAN PATENT SPECIFICATION

(11) **EP 0 368 168 B1**
(45) Date of publication and mention of the grant of the patent: **16.02.1994**
(21) Application number: 89120391.1
(22) Date of filing: 03.11.1989
(51) Int. Cl.: B31B 1/90, B31B 1/66

(54) **A method and a device for pasting a strip tape onto a packaging web equipped with a liquid pouring hole**
Verfahren und Vorrichtung zum Befestigen von Streifen auf eine Schachtelbahn mit einem Giessloch
Procédé et dispositif de fixation d'un ruban sur une bande d'empaquetage pourvue d'un trou verseur

(30) Priority: 07.11.1988 JP 280876/88
(43) Date of publication of application: 16.05.1990
(73) Proprietor: AB Tetra Pak, 221 86 Lund (SE)
(72) Inventor: Watanabe, Masahi No. 302, Sun Stage Ryokuentoshi, Yokohama-Shi Kanagawa (JP)
(74) Representative: Glawe, Delfs, Moll & Partner

(56) References cited:
- EP-A- 0 200 877
- FR-A- 2 371 294
- US-A- 3 801 394
- US-A- 3 988 195
- US-A- 4 367 620
- US-A- 4 373 978

## Description

The current invention relates to a method and device, according to the characterizing parts of claims 1 and 3, for depositing a strip tape in a stable manner by closing a punch hole for liquid pouring established on a packaging web thereby preventing generation of pinholes at the punch hole area when manufacturing a package container with a pull-tab opening device for a liquid product such as milk, using a packaging machine.

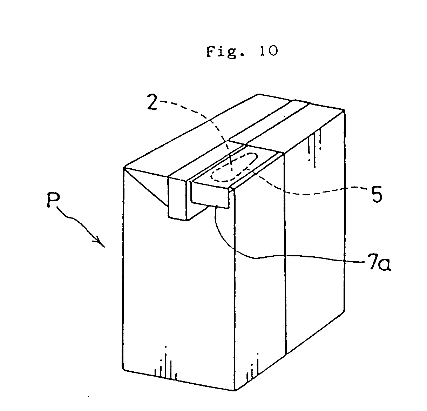

Currently, a paper container called a pack container as shown in Fig. 10 is used as a container for the vending of juice or milk. In order to easily pour juice or milk from this kind of pack container (P), an opening device is established such that a liquid-pouring punch hole (5) is previously formed on the container top plane and its inner plane is sealed with a strip tape (2) to make the container liquid-tight, and a pull-tab (7a) is heat-sealed from outside so that a punch hole (5) part of the strip tape (2) is torn together by pulling apart the pull-tab (7a), and the liquid pouring hole (5) is easily opened.

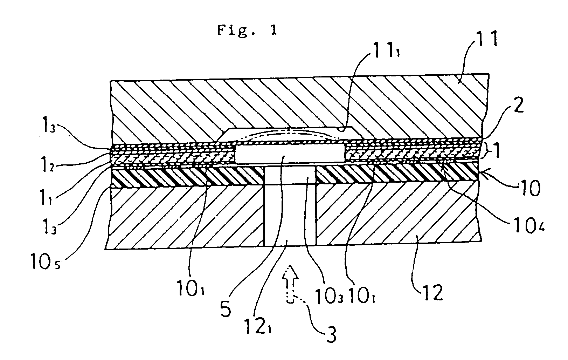

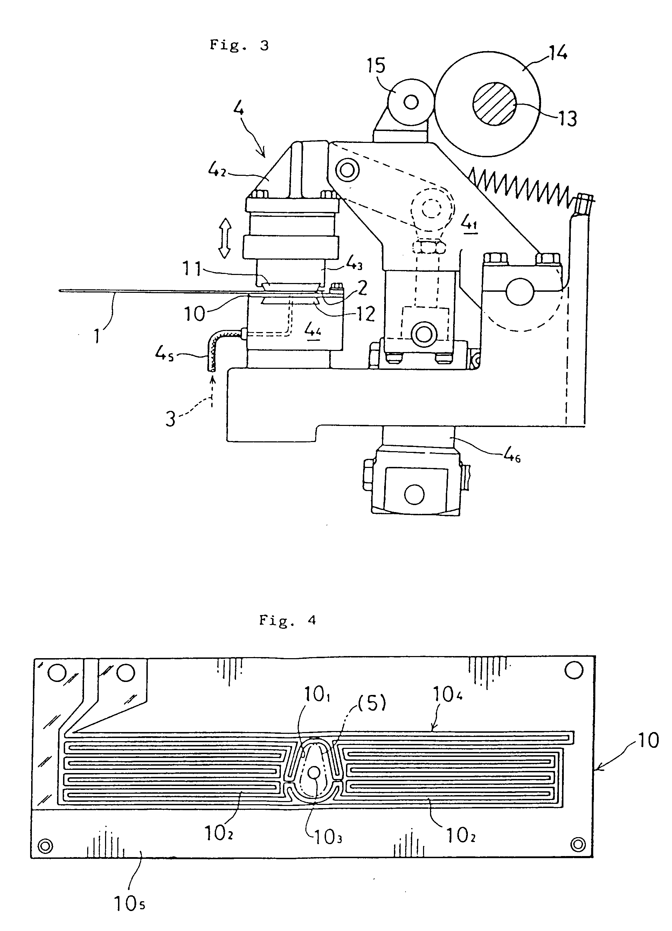

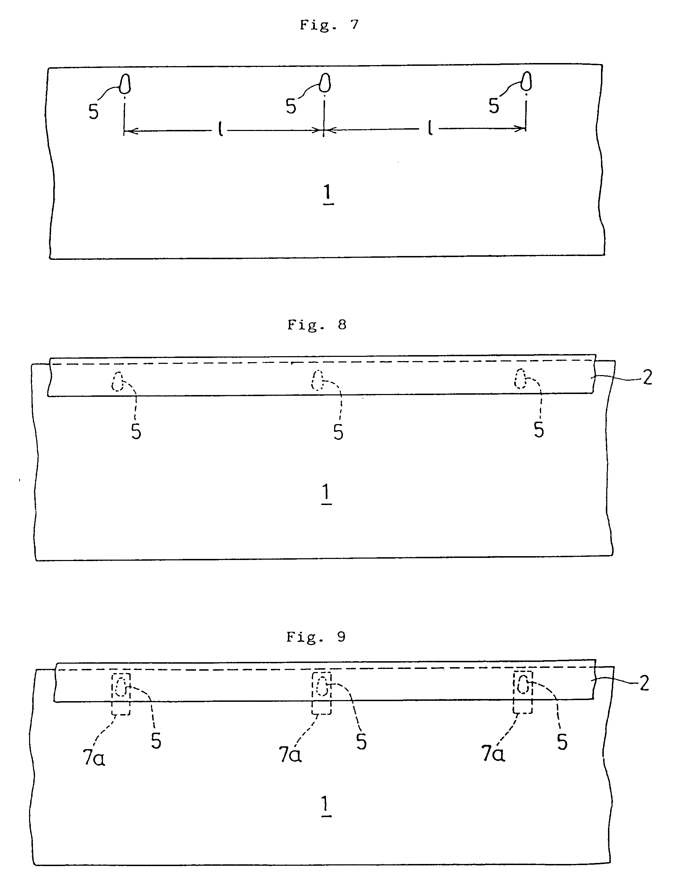

Conventionally, in mounting this kind of opening device onto a container, said opening device is formed at a prescribed position on the packaging material in the packaging material condition (packaging web), and this is folded to make a container into which liquid food is filled. As shown in Fig. 1, the packaging web (1) usually consists of a paper material (1₁), which is a supporting material layer, on one surface of which is fixed a metallic foil layer (1₂) such as aluminium foil, and the surface of said metallic foil layer (1₂) and another surface of the paper (1₁) are laminated with a polyethylene layer (1₃) (note that in the figure, the web is drawn to appear thicker to make it easier to see). In forming an opening device for such a packaging web (1), when sealing the liquid-pouring punch hole (5) with a resin strip tape (2), the strip tape (2) is placed over a prescribed position on said packaging web and heated and deposited by a heat coil for high-frequency induction heating onto the surface of the packaging web (1) (refer to Fig. 7) in which punch holes (5) are intermittently and successively formed after each prescribed interval (1). This high-frequency induction heating coil is a quasi-rectangular print coil (10₄) of a prescribed length (corresponding to the intermittent conveyance distance for the packaging web) on a flat plate having an open coil part (10₁) that surrounds a punch hole (5) in the center, as shown in the example in Fig. 4 (except the central hole (10₃)), and onto both sides of the open coil part are formed a rectangularly formed coil part (10₂). Between the high-frequency induction heating coil (10) and the pressure rail (11), the strip tape (2) is pressed onto the packaging web (1) and the metallic foil layer (1₂) adjacent to said tape is heated by a high-frequency wave to deposit the tape onto the web. When heating and depositing said tape onto the web plane, the punching hole (5) of the packaging web (1) is positioned inside the open coil part (10₁) in the center of the quasi-rectangular print coil (10₄) on the high-frequency induction heating coil (10). After the strip tape (2) closes the punch hole (5) on the polyethylene-laminated layer (1₃) surface on the metallic foil layer (1₂) side of the packaging web (1) and is deposited with a prescribed margin for longitudinal sealing of the web (see Fig. 8), a pull-tab (7a) of a prescribed length closes the above punch hole (5) on the polyethylene-laminated layer (1₃) surface of the paper material (1₁) on the back of the deposited part, and heat sealed together with the strip tape (2) onto the packaging web (1) to form an opening device (see Fig. 9).

When a strip tape (2) is pressed onto a packaging web (1) to close a punch hole (5) and deposited by high-frequency induction heating between the high-frequency induction heating coil (10) and the pessure rail (11), there is no metallic foil layer (1₂) and polyethylene-laminated layer (1₃) inside the edge of a punch hole (5). when the coil part (10₁) formed to surround the entral punch hole (5) of the above print coil part (10₃) heats the edge part of the punch hole (5) of the above metallic foil layer (1₂), the laminated layer (1₃) of said edge part and the strip tape (2) contacting that part is heated to a half-melted condition. The strip tape (2) becomes thin in the part positioned between the strip tape (2) inside the unheated punch hole (5) and the above mentioned heated strip tape (2), resulting in easy generation of pinholes inside the strip tape and leakage and deterioration of the contents. Futhermore, the edge part of the above mentioned punch hole is subject to an intense load, and this, together with the heating of the punch hole edge part of the above mentioned strip tape, tends to result in poor strength at the joint of the punch hole edge part.

The current invention was conceived to solve the above problems with the purpose of providing an improved method and device to paste a strip tape onto the packaging web with a measure to prevent generation of pin holes, to prevent leakage and deterioration of the contents, and to prevent the joint of the punch hole edge part from weakening, when pasting a strip tape onto the packaging web by sealing a punch hole which is to become the liquid-pouring hole of said web with a synthetic resin strip tape.

In the current invention, in order to achieve the above mentioned purpose, a method is taken in which a strip tape (2) is pasted onto a packaging web (1) between a flat heating material and a freely pressible pressure rail (11) set over and below the conveyance path of a packaging web (1) conveyed intermittently by pressing a strip tape (2) onto said packaging web (1) and closing a previously made punch hole (5), and at this time air is blown via said punch hole to an area of the strip tape that closes the punch hole (5) by overlapping on the packaging web surface, to loosen the strip tape (2) at said area and deposit the strip tape (2) onto the packaging web (1).

As a device to implement this method, an air blowing hole (10₃) is established inside an apertured heating part (10₁) formed so as to surround a punch hole (5) of an intermittently conveyed and stopped packaging web (1) on the flat heating material (10) set on one side of the conveyance path of the packaging web, and on the pressure rail on the opposite side, an escape (11₁) is established for blowing air through the punch hole to the strip tape (1) on the opposite side of the above mentioned apertured heating part (10₁), so that at the time of pasting the strip tape (2) onto the above mentioned web (1), air is blown through an air blowing hole (10₃) of the above mentioned induction heating coil (10).

And as for the heating material (10), when the packaging web (1) consists of a metallic foil layer, it is preferable to use a high-frequency induction heating coil (10) made of a print coil (10₄) formed on an insulated plate (10₅). In this case,it is preferable to use something in which a rectangularly formed coil part (10₂) is formed around the open coil part (10₁) which is part of an apertured heating part surrounding the punch hole (5), and an air blowing hole (10₃) is established in the center of the open coil part (10₁).

When closing the punch hole (5) of the packaging web (1) with a strip tape (2) to paste the strip tape onto said web (1) using the above mentioned method, the part of the strip tape (2) that covers the punch hole (5) of the web (1) becomes loose with the air blown to that part, and because of this looseness of the tape inside the punch hole (5), the border between the strip tape part inside the unheated punch hole (5) and the strip tape part heated and half-melted around the punch hole edge does not become thin, and therefore generation of pinholes is prevented and weakening of the joint is also prevented.

On the other hand, when blowing air to the strip tape (2) at the above mentioned punch hole closed part from the air blowing hole (10₃) inside the apertured heating part of the heating material such as the air blowing hole (10₃) in the center of the open coil part (10₁) of the high-frequency induction heating coil (10) to execute the above mentioned method, the strip tape at said closed part can be easily loosened by the escape (11₁) of the pressure rail (11) for pressing said tape so that the generation of pinholes can be prevented for deposit processing.

Embodiments of the current invention shall now be described in reference to the accompanying drawings, in which:
Fig. 1 is an enlarged section view of the core of the device using the method of the current invention, in which the joint between the punch hole of the packaging web having metallic foil layer and the strip tape is drawn with an enlarged web thickness to make it easier to see;
Fig. 2 is a schematic front view of the packaging container open part formation device of the current invention equipped with a pasting device;
Fig. 3 is a side view of the strip tape pasting device using the method of the current invention;
Fig. 4 is a plan view of the high-frequency induction heating coil working as the heating material;
Fig. 5(a) is a plan view of the pressure rail;
Fig. 5(b) is a section view along line A - A of Fig. 5(a);
Fig. 6(a) is a plan view of the backplate;
Fig. 6(b) is a section view along line B - B of Fig. 6(b);
Fig. 7 is a plan view showing the packaging web with a punch hole;
Fig. 8 is a plan view showing the packaging web with its punch hole sealed with a strip tape,
Fig. 9 is a plan view showing the packaging web with a pull-tab attached;
Fig. 10 is a diagonal view of the packaging container with a pull-tab type opening device.

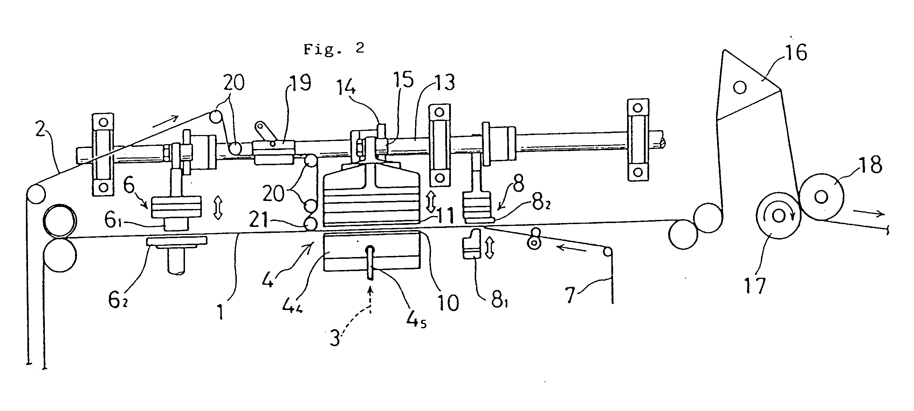

Fig. 1 is an enlarged view showing the pasting part of the device that pastes a strip tape onto a packaging web having metallic foil layer using the method of the current invention, showing the formation condition of the joint between the punch hole of the packaging web and the strip tape. This strip tape pasting device is used to form the packaging container open part established in the front part of the packing machine. Fig. 2 is a front view showing said open part formation device schematically, in which the packaging web (1) is processed while passing through said open part formation device, and punch holes (5), (5) are formed one after another with an interval of (1) between them as shown in Fig. 7, Fig. 8, and Fig. 9, and said punch hole (5) is sealed by strip tape (2), and the pull tab (7a) is pasted by heat sealing so as to close a punch hole (5) on the opposite side from the strip tape (2) of the packaging web (1) to form a pull-tab type opening device in a precontainer condition. More specifically, the packaging web (1) is intermittently conveyed upward by drive roller (19) to be mentioned later, from an unillustrated packaging web reel established in the lower left hand side of Fig. 2, and its direction is altered to the horizontal direction via direction-altering rollers, and while it is intermittently conveyed between the vertically moving punch (6₁) of the piercing device (6) and the fixed die (6₂), punch holes (5) are made, and at the strip tape pasting device (4), punch holes are sealed by putting the upper surface of the conveyed packaging web and the strip tape (2) together between the flat high-frequency induction heating coil (10) and the pressure rail (11). Next, at the pull-tab pasting device (8), a pull-tab type opening device is formed on the packaging web (1) by heat sealing on the bottom surface of the packaging web (1) so as to cover the punching hole by a pull-tab (7a) cut out from the pull-tab tape (7) between the vertically moving heating body (8₁) positioned below the intermittently conveyed packaging web (1) and equipped with a pull-tab tape (7) cutting device and the counter rail (8₂) positioned above the path of the packaging web (1). The packaging web (1) with an opening device attached goes through a pair of direction-altering rollers downstream, and after the folds that are previously established on the packaging web (1) at the folding wheel (16) placed in the upper position with corners on the perimeter are aligned, the packaging web (1) is intermittently conveyed by force between the lower drive roller (17), which is intermittently rotated by an unillustrated drive motor, and the counter roller (18), and after that, conveyance of said packaging web (1) is controlled by the freely, vertically moving dancing roller of an unillustrated conveyance control magazine and the packaging web (1) moves toward the filling part in a continuous running condition, and is bent at said filling part, and the formed package is filled with a liquid product, sealed, cut and formed to continuously make a package container with a pull-tab type opening device (p) (see Fig. 10).

The above mentioned strip tape pasting device (4) has, below the packging web (1) conveyance path, a flat high-frequency induction heating coil (10) mounted on a backplate (12) in the upper part of the mount (4₄), and above the path, a pressure rail (11) mounted in the bottom of the vertically moving counter jaw (4₃). Said counter jaw (4₃) is pivoted at the tip of a lever (4₁) with a cam roller (15) driven by a cam (14) (see Fig. 2 and Fig. 3) mounted at the main shaft (13), and mounted below a top end part (4₂) connected to an air cylinder (4₆) mounted on said lever, to move up and down in a prescribed manner when main shaft (8) rotates. And when the counter jaw (4₃) moves up and down, the strip tape (2) guided by direction-altering rollers and guide rollers and braked by a braking means (19) on the way of conveyance is overlayed on the web (1) surface at the pressure roller (21) just before the pasting device (4) in a manner such that an edge of said tape extends beyond an edge of the packaging web (1) to cover the punch hole, and after being pressed by the pressure rail (11) on the high-frequency induction heating coil (10) and the pressure part heated by the high frequency induction, said tape (2) is deposited to the prescribed position on the packaging web (1).

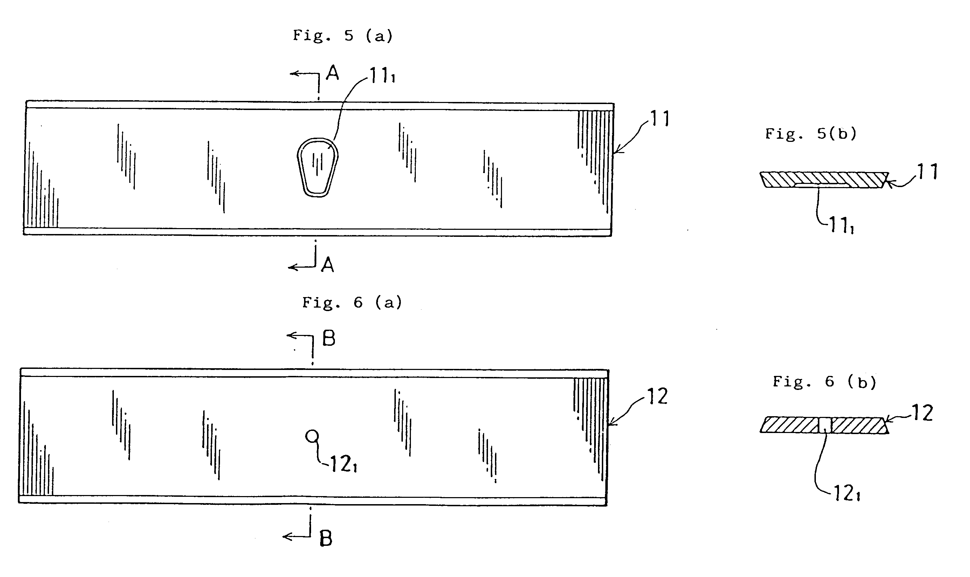

The high-frequency induction heating coil (10) is a rectangular synthetic resin insulated plate (10₅) with a print coil (10₄) fixed to it, as shown in Fig. 4. Said print coil (10₄) has an open coil (10₁) in the center so as to surround the punch hole (5) of the packging web (19) which is intermittently conveyed and stopped on the conveyance line, and an air blowing hole (10₃) is established in the center of said open coil (10₁), and on the left and right of said coil (10₁) are rectangularly formed coil parts (10₂), (10₂) of a prescribed width and having bent parts on both sides of the longitudinal direction, which are formed to extend over the distance of the intermittently conveyed distance of the packaging web (1). On the other hand, the pressure rail (11) set opposite to the high-frequency induction heating coil (10) is a rectangular form of prescribed dimensions with its edges on the longer sides tapered for the purpose of mounting on the counter jaw (4₃), and an excape (11₁) for the strip tape (2) loosended by the air is formed at a prescribed depth so as to face the above mentioned coil (10₁) in the center (see Fig. 5(b)). The backplate (12) for the high-frequency induction heating coil (10), mounted on the mount (4₄) so as to contact said coil, is formed to have the same exterior dimensions as the above mentioned pressure rail (11) as shown in Fig. 6 (a), and in its center, an air hole (12₁) that connects with the above mentioned high-frequency induction heating coil (10) when mounting said coil to the mount (4₄) is established (see Fig. 6 (b)). On the above mentioned mount (4₄) an air blowing tube (4₅) connected to an unillustrated air pump from the front is mounted (see Fig.2 and Fig. 3), so that air (3) is blown from an air path penetrating the mount (4₄) to a part of the strip tape (2) that covers the upper plane of the punch hole (5) of the packging web (1) through an air hole (12₁) of the above mentioned backplate and an air blowing hole (10₃) of the above mentioned high-frequency induction heating coil (10).

According, when pasting the strip tape (2) onto the upper plane of the packaging web (1), the part of the strip tape (2) that closes the punch hole of the packaging web (1) is heated and deposited to the circumferential edge of the punch hole (5) in a loose condition caused by air (3) from below as shown by the chain line in Fig. 1, and therefore, the thickness of the part of the strip tape positioned between the tape inside the punch hole (5) and said circumferential edge is prevented from becoming thin due to partial melting and therefore the generation of pinholes is prevented, and at the same time the strength at the joint is maintained. For this reason, when pasting the pull-tab (7a) onto the packaging web (1) surface on the other side of the strip tape (2), the heating condition at the time of pull-tab pasting can be reduced, and therefore the pull-tab can be pasted onto the strip tape in a stable condition.

In the above mentioned embodiment, a metallic foil layered web is used as a packging web, and a high-frequency induction heating coil is used as a heating material, but as anyone trained in the art will know, the embodiment is not restricted to these materials. Even when using a web without metallic foil layer and a heating material of ordinary electric heat, heating and depositing can be done in the same manner.

As it is obvious from the above description, the current invention generates the following effects.

In the method described in claim 1; formerly when making a packaging container with an opening device wherein a liquid-pouring hole is opened by pulling off a pull-tab established on the packaging container filled with a liquid product such as juice or milk, the punch hole that functions as a liquid-pouring hole is deposited by a synthetic resin strip tape in the packaging web condition, and when this is done, the part of the strip tape around said punch hole tended to become thin and allowed the generation of pinholes causing leakage and deterioration of the contents, but in the current invention, the part of the strip that closes the punch hole is first loosened by blowing air to that part and deposited in that condition to prevent the generation of pinholes in the strip tape and the leakage and deterioration of the contents caused by it, and in addition to that, with more relaxed heating conditions at the time of pull-tab pasting, the pasting between the strip tape and the pull-tab is stable and secure, contributing to good operability of the pull-tab.

In the device described in claim 2; of the heating material and the pressure rail set in opposition across the conveyance path of the packaging web in the strip tape pasting device, the heating material has an air blowing hole established in the center of the apertured heating part established so as to surround the intermittently conveyed and stopped punch hole, and the pressure rail opposing this has a strip tape escape established opposite the apertured heating part so that looseness can be formed on the strip tape efficiently and smoothly at the time of pasting the strip tape to the web, and this way the device can paste the strip tape in a stable manner of the web without generating pinholes.

In the device described in claim 3, a high-frequency induction heating coil is used as a heating material and the apertured heating part is formed with an open coil part, and therefore when using a packaging web having a metallic foil layer, the device can paste the strip tape with easy deposition control.

## Claims

1. A method for heat-sealing a strip tape onto a packaging web for closing a punch-hole formed in said packaging web, so as to form a sealed liquid-pouring opening for a liquid container made from said packaging web, comprising the steps of:
conveying the packaging web (1) having the punch hole (5) formed therein, and the strip tape (2) overlaying the packaging web and covering the punch-hole intermittently along a conveying path between a flat heating member (10) and a pressure member (11);
and pressing the strip tape by means of a pressure member onto the packaging web whilst applying heat to said packaging web by said heating member to heat-seal the strip tape to the packaging web to close the punch-hole **characterized** by the step of blowing air via said punch-hole (5) onto the area of the strip tape (2) that covers the punch-hole to keep the strip tape in that area in a loosened state.

2. A method as claimed on claim 1,
**characterized in** that said strip tape (2) is kept in the loosened state by said air in an area which includes an area surrounding the punch-hole and overlapping the edges thereof.

3. A device for heat-sealing a strip tape onto a packaging web for closing a punch-hole formed in said packaging web, comprising
means for conveying a packaging web (1) having punch-holes formed therein along a conveying path
means (20, 21) for feeding the strip tape (2) overlaying that packaging web (1) along that conveying path;
a heating meber (10) disposed on one side of the conveying path
a pressure member (11) disposed on the other side of said conveying path opposite said heating member (10)
and means for moving the pressure member (11) to press and heat-seal the strip tape (2) against the packaging web (1) heated by said heating member (10)
**charecterized in**
that an air blowing aperture (10₃) is provided in said heating member (10) and connected to an air blowing means for blowing air through a punch-hole (5) of the packaging web (1) aligned with the air blowing aperture (10₃) onto the strip tape (2) covering the punch-hole (5),
and an escape recess (11₁) is formed in said pressure member (11) opposite the air blowing aperture (10₃) for allowing the part of the strip tape covering the punch-hole (5) to be deformed into a loosened state by the air blown through the air blowing aperture (10₃).

4. A device as claimed in claim 3,
**characterized in** that said heating member (10) and said escape recess (11₁) surround said punch-hole (5) in a spaced relationship.

5. A device as claimed in claim 3 or 4
**charecterized in** said heating member (10) comprises a high frequency induction heating coil formed of a print coil (10₄) on an insulated plate (10₅), wherein the print coil (10₄) comprises a rectangular formed coil part (10₂) surrounding an apertured heating coil part (10₁), and said air blowing aperture (10₃) is located in the center of the area surrounded by the apertured heater coil part (10₁).

## Patentansprüche

1. Verfahren zum Heißsiegeln eines Streifenbandes auf eine Verpackungsbahn zum Verschließen eines in der Verpackungsbahn ausgebildeten Stanzloches, um eine verschlossene Flüssigkeits-Ausgießöffnung für einen aus der Verpackungsbahn hergestellten Flüssigkeitsbehälter zu bilden, mit den Schritten:
Fördern der Verpackungsbahn (1) mit dem darin ausgebildeten Stanzloch (5) und des die Verpackungsbahn überlagernden und das Stanzloch überdeckenden Streifenbandes (2) intermittierend längs eines Förderweges zwischen einem flachen Heizelement (10) und einem Druckelement (11);
und Anpressen des Streifenbandes mittels des Druckelementes an die Verpackungsbahn unter Aufbringung von Wärme auf die Verpackungsbahn durch das Heizelement, um das Streifenband an die Verpackungsbahn anzusiegeln und das Stanzloch zu verschließen,
**gekennzeichnet** durch den Schritt des Blasens von Luft durch das Stanzloch (5) auf den Bereich des Streifenbandes (2), der das Stanzloch überdeckt, um das Streifenband in diesem Bereich in einem lockeren Zustand zu halten.

2. Verfahren nach Anspruch 1,
dadurch **gekennzeichnet,** daß das Streifenband (2) durch die Luft in dem gelockerten Zustand gehalten wird in einem Bereich, der eine das Stanzloch umgebende und dessen Kanten überlappende Fläche einschließt.

3. Vorrichtung zum Heißsiegeln eines Streifenbandes auf eine Verpackungsbahn zum Schließen eines in der Verpackungsbahn ausgebildeten Stanzloches,
mit Mitteln zum Fördern der Verpackungsbahn (1) mit darin ausgebildeten Stanzlöchern entlang einem Förderweg,
Mitteln (20, 21) zum Zuführen des die Verpackungsbahn (1) überlagernden Streifenbandes (2) längs des Förderweges; einem Heizelement (10), das auf einer Seite des Förderweges angeordnet ist,
einem Druckelement (11), das auf der anderen Seite des Förderweges gegenüber dem Heizelement (10) angeordnet ist, und Mitteln zum Bewegen des Druckelementes (11), um das Streifenband (2) gegen die vom Heizelement (10) erhitzte verpackungsbahn (11) anzudrücken und anzusiegeln,
dadurch **gekennzeichnet,** daß
eine Luftblasöffnung (10, 3) in dem Heizelement (10) vorgesehen und mit einer Luftblaseinrichtung verbunden ist, um Luft durch ein mit der Luftblasöffnung (10, 3) fluchtendes Stanzloch (5) der Verpackungsbahn (1) auf das das Stanzloch (5) überdeckende Streifenband (2) zu blasen,
und daß eine Ausweichvertiefung (10, 1) in dem Druckelement (10) gegenüber der Luftblasöffnung (10, 3) ausgebildet ist, damit der das Stanzloch (5) überdeckende Teil des Streifenbandes durch die durch die Luftblasöffnung (10) geblasene Luft in einen gelockerten Zustand verformt werden kann.

4. Vorrichtung nach Anspruch 3,
dadurch **gekennzeichnet,** daß das Heizelement (10) und die Ausweichvertiefung (11, 1) das Stanzloch (5) in einem Abstand umgeben.

5. Vorrichtung nach Anspruch 3 oder 4,
dadurch **gekennzeichnet,** daß das Heizelement (10) eine Hochfrequenz-Induktionsheizspule aufweist, die von einer aufgedruckten Spule (10, 4) auf einer isolierenden Platte (10, 5) gebildet ist, wobei die gedruckte Spule (10, 4) einen rechteckig geformten Spulenteil (10, 2) aufweist, der einen mit Öffnung versehenen Heizspulenteil (10, 1) umgibt, und daß die Luftblasöffnung (10, 3) im Mittelpunkt der von der mit Öffnung versehenen Heizspulenteil (10, 1) umgebenen Fläche angeordnet ist.

## Revendications

1. Procédé pour thermosceller un ruban à déchirer sur une bande d'emballage pour fermer une perforation formée dans ladite bande d'emballage, afin de former une ouverture scellée de versement de liquide pour un récipient à liquide réalisé à partir de ladite bande d'emballage, comprenant les étapes qui consistent :
à transporter la bande d'emballage (1) dans laquelle est formée la perforation (5), avec le ruban (2) à déchirer s'étendant au-dessus de la bande d'emballage et couvrant la perforation, de façon intermittente le long d'un trajet de transport entre un élément chauffant plat (10) et un élément presseur (11) ;
et à presser le ruban à déchirer au moyen d'un élément presseur sur la bande d'emballage tout en appliquant de la chaleur à ladite bande d'emballage par ledit élément chauffant afin de thermosceller le ruban à déchirer à la bande d'emballage pour fermer la perforation,
caractérisé par l'étape qui consiste à projeter de l'air par l'intermédiaire de ladite perforation (5) sur la zone du ruban (2) à déchirer qui recouvre la perforation afin de maintenir dans cette zone le ruban déchiré dans un état décollé.

2. Procédé selon la revendication 1,
caractérisé en ce que ledit ruban (2) à déchirer est maintenu dans l'état décollé par ledit air dans une zone qui comprend une zone entourant la perforation et chevauchant ses bords.

3. Dispositif pour thermosceller un ruban à déchirer sur une bande d'emballage afin de fermer une perforation formée dans ladite bande d'emballage, comportant
des moyens pour transporter une bande d'emballage (1) dans laquelle sont formées des perforations le long d'un trajet de transport,
des moyens (20, 21) pour faire avancer le ruban à déchirer (2) s'étendant au-dessus de ladite bande d'emballage (1) le long de ce trajet de transport ;
un élément chauffant (10) disposé sur un côté du trajet de transport,
un élément presseur (11) disposé sur l'autre côté dudit trajet de transport, opposé audit élément chauffant (10),
et des moyens pour déplacer l'élément presseur (11) afin de presser et thermosceller le ruban à déchirer (2) contre la bande d'emballage (1) chauffée par ledit élément chauffant (10),
caractérisé en ce qu'une ouverture (10₃) de projection d'air est prévue dans ledit élément chauffant (10) et est reliée à un moyen de projection d'air pour projeter de l'air à travers une perforation (5) de la bande d'emballage (1), alignée avec l'ouverture (10₃) de projection d'air, sur le ruban à déchirer (2) recouvrant la perforation (5),
et un évidement (11₁) d'échappement est formé dans ledit élément presseur (11) en opposition à l'ouverture (10₃) de projection d'air pour permettre à la partie du ruban à déchirer recouvrant la perforation (5) d'être déformée dans un état décollé par l'air projeté à travers l'ouverture (10₃) de projection d'air.

4. Dispositif selon la revendication 3,
caractérisé en ce que ledit élément chauffant (10) et ledit évidement (11₁) d'échappement entourent ladite perforation (5), à distance.

5. Dispositif selon la revendication 3 ou 4
caractérisé en ce que ledit élément chauffant (10) comporte une bobine de chauffage par induction à haute fréquence formée d'un enroulement imprimé (10₄) sur une plaque isolée (10₅), dans lequel l'enroulement imprimé (10₄) comporte une partie d'enroulement (10₂) formée en rectangle entourant une partie d'enroulement chauffant ajourée (10₁), et ladite ouverture (10₃) de projection d'air est située dans le centre de la zone entourée par la partie d'enroulement chauffant ajourée (10₁).
